# EUROPEAN PATENT APPLICATION

(11) **EP 1 813 407 A2**
(43) Date of publication of application: **01.08.2007**
(21) Application number: 07101044.1
(22) Date of filing: 23.01.2007
(51) Int. Cl.: B29C 44/04, B29C 44/38

(54) **Sponge production process and plant**

(30) Priority: 27.01.2006 IT MI20060140
(71) Applicant: Martini S.p.A., 43058 Coenzo di Sorbolo (Parma) (IT)
(72) Inventor: MARTINI, Fulvio, 43058, COENZO DI SORBOLO (PR) (IT)
(74) Representative: Pesce, Michele

(57) **Abstract**

The sponge production process consists of heating a mould (3) of Teflon or silicone to a temperature between 60°C and 70°C, feeding a mixture comprising a plastic material and a reagent into the mould, allowing the mixture to rise for a time less than 30 minutes, and extracting the finished sponge (10) from the mould. In this manner an absorbent sponge is obtained without an impermeable surface skin. The plant comprises a conveyor (2) for conveying a mould (3) to mould heating means (4), followed by feeding means (5). The plant then comprises rising means (7) arranged to retain the mould for a time such that the mixture contained in the mould undergoes rising, followed by means for discharging the sponge (10).

## Description

The present invention relates to a sponge production process and plant; by means of the present invention, sponges of natural type or of other forms can be produced.

Traditional sponges are known to be produced by moulding a plastic material such as polyurethane, cellulose, PVA etc. in metal moulds, or by machining expanded polyurethane, expanded cellulose etc. in blocks.

The sponges are then processed to remove their outer surface either by cutting or milling to give them the desired form.

Traditional sponge production methods evidently present numerous drawbacks and shaping limits, including in particular the large quantity of production waste with consequent costs related both to the discarded material and to the need to suitably dispose of this production waste.

The technical aim of the present invention is therefore to provide a process and plant which enable the stated technical drawbacks of the known art to be eliminated.

Within the scope of this technical aim an object of the invention is to provide a process and plant which enable the production waste to be limited.

Another object of the invention is to provide an ecological and economical process and plant which enable the sponges to be produced in a substantially low-cost manner.

A further object of the invention is to provide a process for producing sponges which, although being formed of plastic material, present an appearance similar to that of a natural sponge.

The technical aim, together with these and further objects, are attained according to the present invention by a process and plant in accordance with the accompanying claims.

Further characteristics and advantages of the invention will be apparent from the description of a preferred but non-exclusive embodiment of the process and plant, illustrated by way of non-limiting example in the accompanying drawings, in which:
Figure 1 is a schematic view of a plant according to the invention; and

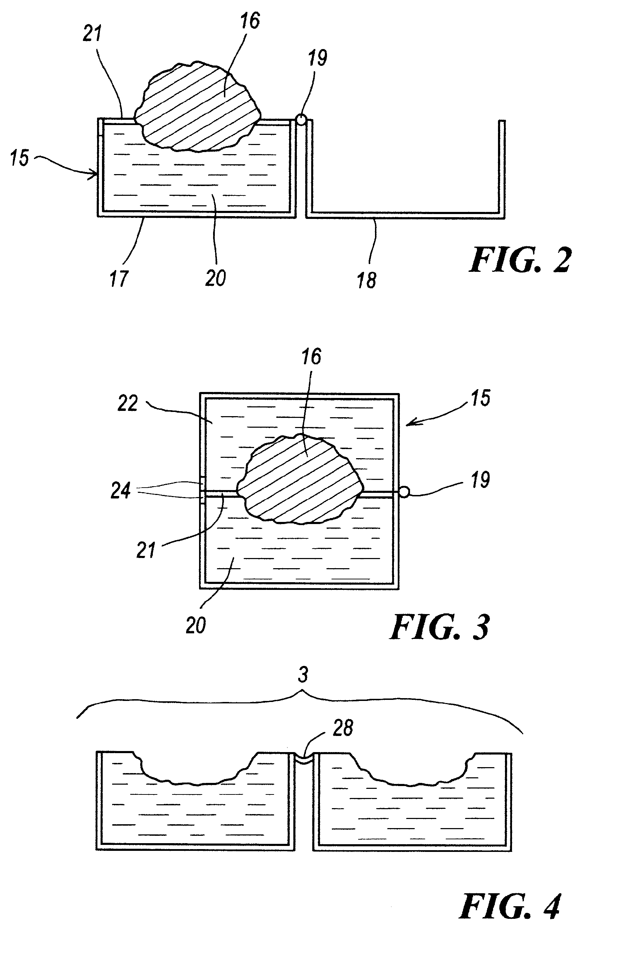

Figures 2, 3 and 4 each show a schematic view of a hollow body for forming a mould if the invention during various stages in the formation of the mould.

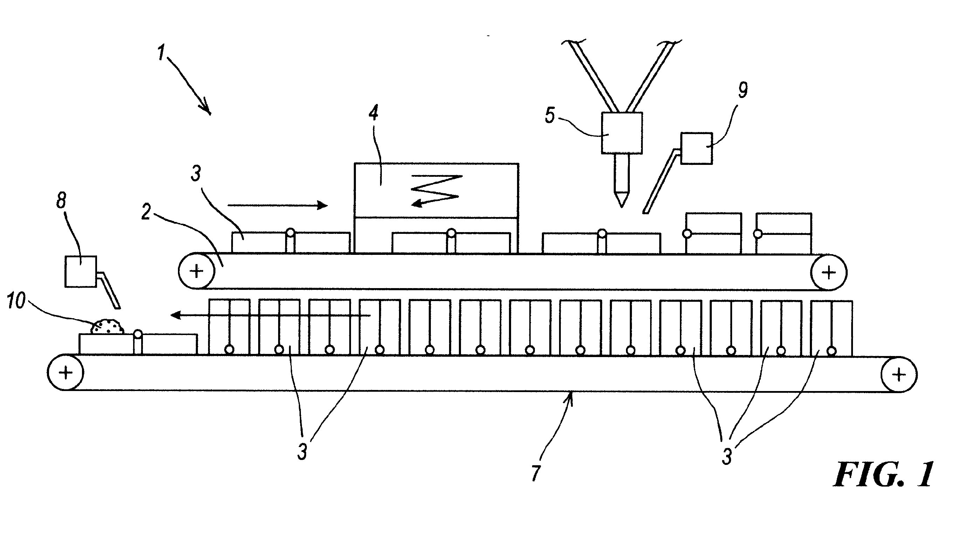

With reference to Figure 1, the production process for a sponge 10 consists of heating a mould 3 (formed of type 3040A and 3040B silicone marketed by the company Siliconi Padova) to a temperature between 60°C and 70°C and preferably about 65°C.

A mixture comprising a plastic material such as a hydrophilic polyurethane prepolymer and a reagent such as bacteriologically pure water (which have been mixed together dynamically) is fed into the mould and the mixture is allowed to rise for a time less than 30 minutes, preferably for about 20 minutes.

The finished sponge 10 is then extracted from the mould 3; in this manner an absorbent sponge without an impermeable surface skin is obtained and is ready to be packaged and/or marketed.

Preferably just the inner surface of the mould 3 is heated to a temperature of 60°C-70°C, preferably 65°C.

The mixture can also contain additives (added to the water, to the resin or directly to the mixing head) consisting of one or more of the following substances: surfactants and/or antibacterials and/or thickeners, perfume, antibacterial soap, vitamins, sponge softening and tenderising agents, disinfectant, dye, antioxidants, antimicrobics, creams, oils, detergents, cosmetic and/or pharmacological substances.

The hydrophilic prepolymer consists of the product marketed under the name Hypol by DOW, the hydrophilic prepolymer and the water being contained in the mixture in a weight ratio between 1:1 and 1:1.5, for example for each kg of hydrophilic prepolymer a water quantity of 1-1.5 kg is used.

The mixture is fed into the mould by pouring, the mould being closed after pouring and rising being undertaken with the mould closed and disposed vertically.

Before pouring, a product for facilitating sponge removal from the mould is applied to the mould inner surface.

Preferably, after the sponge has been extracted from the mould at least one further additive is injected into the sponge, this additive comprising at least one of the following: perfume, antibacterial, soap, vitamins, sponge softening and tenderising agents, disinfectant, dye, antioxidants, antimicrobics, creams, oils, detergents, cosmetic and/or pharmacological substances, etc.

The process is implemented by a sponge production plant 1 comprising a conveyor 2, for example a belt conveyer, for conveying a mould 3 to mould heating means 4 consisting of an infrared oven.

The belt 2 then carries the mould 3 to means for feeding the mixture into the mould 3; these feeding means consist in the present example of a pouring head 5 in the form of a three-axis robot.

The plant next comprises rising means 7 arranged to retain the mould 3 for a prefixed time such that the mixture contained in the mould 3 undergoes rising, followed in the plant by sponge discharge means 8 which remove the sponge 10 from the mould 3.

In a preferred embodiment, downstream of the pouring head 5 the plant 1 presents a member 9 for closing the mould 3; in the same manner the discharge means 8 comprise a member for opening the mould 3 in order to discharge the sponge contained therein.

The present invention also relates to a method for forming a silicone mould 3 for a sponge 10 for use in the aforedescribed production process.

The mould 3 formation method consists of positioning within a hollow body 15 (in its open configuration) a pattern 16 of the sponge to be produced.

The hollow body 15 consists for example of two metal half-casings 17, 18 rotatably connected together (enabling them to be opened or closed) by a hinge 19.

After the pattern 16 has been introduced into the hollow body 15, a first mixture 20 consisting of silicone of type 3040A marketed by the company Siliconi Padova and catalyst of type 3040B marketed by the company Siliconi Padova (about one half of the half-casing 17 of the hollow body is filled) and the mixture 20 left to react to solidification at a temperature between 30°C and 40°C for 8 hours.

When the mixture 20 has solidified, a layer 21 of detachment product is applied to the free surface of the solidified mixture 20, then a second liquid mixture 22 of silicone and catalyst is introduced into the half-casing 18 of the hollow body (about one half of the half-casing 18 of the hollow body is filled) and reacted to solidification at a temperature between 30°C and 40°C for 8 hours.

The hollow body 15 is then opened, the pattern 16 is removed from the mould and the formed mould 3 is extracted from the hollow body.

The mould is preferably formed with a connection element 28 left between the two half moulds to act as a hinge.

The first mixture 20 and the second mixture 22 are identical, they (mixture 20 and 22) comprising silicone in a percentage between 85% and 95% by weight and catalyst in a percentage between 5% and 15%, their rising time after each feed being less than 10 hours, preferably between 7 and 9 hours and more preferably about 8 hours.

The hollow body 15 presents at least one reaction gas vent passage consisting of two chamfers 24 provided in that edge of the hollow body 15 opposite to that at which the hinge 19 is applied.

The pattern 16 consists of a natural sponge made rigid by treatment with urea resin; in particular, the natural sponge is soaked with Protodur urea resin produced by the company Concord and then left to react until the natural sponge is completely rigid.

To form a plurality of moulds all identical and all presenting the same appearance, after the mould has been formed its interior is fed with a quick hardening polyurethane resin of type PU3670A marketed by the company Siliconi Padova, then the mould is closed and the resin left to react for a time between 20 and 40 minutes at ambient temperature, preferably for 30 minutes, to form a plurality of rigid natural sponge patterns usable for making moulds (by the described method) presenting the impression of natural sponges.

Modifications and variants are possible, for example the mould (into which the plastic material is poured to produce the sponge) can be made of Teflon or other material.

The plastic material used to produce the sponge can also consist of an expanded polyurethane such as a polymer obtained by mixing an isocyanate (for example the product Specflex NE 150 marketed by DOW) with a polyol (for example the product Specflex NE 374 marketed by DOW) in the ratio 60:100.

It has been found in practice that the process and plant of the invention are particularly advantageous because besides being economical and ecological, they enable sponges of very good aesthetic characteristics to be produced even when the sponges present the appearance of natural sponges.

The process and plant conceived in this manner are susceptible to numerous modifications and variations, all falling within the scope of the inventive concept; moreover all details can be replaced by technically equivalent elements.

In practice the materials used and the dimensions can be chosen at will in accordance with requirements and the state of the art.

## Claims

1. A sponge production process consisting of heating a mould (3) of Teflon or silicone or other materials to a temperature between 60°C and 70°C, feeding a mixture comprising a plastic material and a reagent into said mould (3), allowing the mixture to rise for a time less than 30 minutes, and extracting the finished sponge (10) from the mould (3) to obtain an absorbent sponge without an impermeable surface skin.

2. A process as claimed in claim 1, **characterised in that** said plastic material is an expanded polyurethane.

3. A process as claimed in one or more of the preceding claims, **characterised in that** the expanded polyurethane is a hydrophilic polyurethane prepolymer and said reagent is water.

4. A process as claimed in one or more of the preceding claims, **characterised in that** just the mould (3) inner surface is heated to a temperature between 60°C and 70°C.

5. A process as claimed in one or more of the preceding claims, **characterised in that** said mixture contains added surfactants and/or antibacterials and/or thickeners and/or perfume and/or antibacterial and/or soap and/or vitamins and/or sponge softening and tenderising agents and/or disinfectant and/or dye and/or antioxidants and/or antimicrobics and/or creams and/or oils and/or detergents and/or cosmetic and/or pharmacological substances.

6. A process as claimed in one or more of the preceding claims, **characterised in that** the hydrophilic prepolymer and the water are contained in the mixture in a weight ratio between 1:1 and 1:1.5.

7. A process as claimed in one or more of the preceding claims, **characterised in that** the mixture is fed into said mould (3) by pouring.

8. A process as claimed in one or more of the preceding claims, **characterised in that** after pouring, the mould (3) is closed and rising is carried out with the mould closed.

9. A process as claimed in one or more of the preceding claims, **characterised in that** before pouring, a product for facilitating sponge (10) removal from the mould (3) is applied to the mould (3) inner surface.

10. A process as claimed in one or more of the preceding claims, **characterised in that** after the sponge (10) has been extracted from the mould (3) at least one further additive comprising at least one of the following: perfume, antibacterial, soap, vitamins, sponge softening and tenderising agents, disinfectant, dye, antioxidants, antimicrobics, creams, oils, detergents, cosmetic and/or pharmacological substances, etc. is injected into the sponge (10).

11. A sponge production plant (1), **characterised by** comprising a conveyor (2) for conveying a mould (3) to mould heating means (4), followed by means (5) for feeding a mixture into said mould (3), said plant (1) then comprising rising means (7) arranged to retain said mould (3) for a prefixed time such that the mixture contained in the mould (3) undergoes rising, followed by discharge means (8) for said sponge (10).

12. A plant (1) as claimed in the preceding claim, **characterised in that** downstream of said feed means (5) said plant (1) presents a member (9) for closing said mould (3), said discharge means (8) comprising a member for opening said mould (3) in order to discharge the sponge (10) contained therein.

13. A plant (1) as claimed in one or more of claims 11-12, **characterised in that** said heating means (4) comprise an infrared oven, said feed means (5) comprising a pouring head.

14. A method for forming a sponge mould (3), **characterised by** consisting of positioning within a hollow body (15) a pattern (16) of the sponge to be produced, introducing a first mixture (20) of silicone and catalyst into the hollow body (15), leaving said first mixture (20) to react until solid, applying a layer (21) of detachment product to the free surface of the solidified first mixture (20), then introducing a second mixture (22) of silicone and catalyst into the hollow body (15) and allowing it to react until solid, then opening the hollow body (15), removing the pattern (16) and extracting the mould (3) which has been formed.

15. A method as claimed in the preceding claim, **characterised in that** the first mixture (20) and the second mixture (22) are identical.

16. A method as claimed in one or more of claims 14 onwards, **characterised in that** the first mixture (20) and the second mixture (22) are reacted at a temperature of 30-40°C for 8 hours.

17. A method as claimed in one or more of claims 14 onwards, **characterised in that** the first mixture (20) and the second mixture (22) comprise silicone in a percentage between 85% and 95% by weight and catalyst in a percentage between 5% and 15% by weight.

18. A method as claimed in one or more of claims 14 onwards, **characterised in that** the time for which the first and second mixture (20, 22) of silicone and catalyst rises after each feed is less than 10 hours and preferably between 7 and 9 hours.

19. A method as claimed in one or more of claims 14 onwards, **characterised in that** said hollow body (15) presents at least one vent (24) passage for the reaction gases.

20. A method as claimed in one or more of claims 14 onwards, **characterised in that** said pattern (16) consists of a natural sponge made rigid by treatment with urea resin.

21. A method as claimed in the preceding claim, **characterised in that** after being formed a quick hardening polyurethane resin is poured into the mould (3) interior, after which the mould (3) is closed and the resin left to react for a time between 20 and 40 minutes at ambient temperature, to form a plurality of rigid natural sponge patterns usable for making moulds presenting the impression of natural sponges.
